# EUROPEAN PATENT APPLICATION

(11) **EP 2 996 031 A1**
(43) Date of publication of application: **16.03.2016**
(21) Application number: 15157073.6
(22) Date of filing: 02.03.2015
(51) Int. Cl.: G06F 3/14, G09G 3/16

(54) **AUXILIARY ELECTRONIC INFORMATION LABEL**

(30) Priority: 10.09.2014 KR 20140119613
(71) Applicant: Samsung Electro-Mechanics Co., Ltd., Gyeonggi-do (KR)
(72) Inventor: Ryu, Jong Gi, Gyeonggi-do (KR); Jo, In Ho, Gyeonggi-do (KR); Namgung, Yong Gil, Gyeonggi-do (KR); Kim, Dae Seob, Gyeonggi-do (KR)
(74) Representative: Grünecker Patent- und Rechtsanwälte PartG mbB

(57) **Abstract**

An electronic information delivery system, and more particularly, an electronic information label attached to a shelf or the like to deliver information of merchandise displayed in a store is provided. An auxiliary electronic information label is connected to a connector of a main electronic information label. The auxiliary electronic information label includes segment electrodes formed as a circuit pattern on a flexible printed circuit board, and drives a flat panel display panel. One end of the flexible printed circuit board is connected to the connector of the main electronic information label.

## Description

### CROSS-REFERENCE TO RELATED APPLICATION(S)

This application claims priority from Korean Patent Application No. 10-2014-0119613, filed on September 10, 2014, in the Korean Intellectual Property Office, the disclosure of which is incorporated herein by reference in its entirety.

### BACKGROUND

### 1. Field

The following description relates to an electronic information delivery system, and more particularly to, an electronic information label attached to a shelf or the like to display merchandise in a store.

### 2. Description of the Related Art

In stores, a paper or plastic tag with printed text may be adhered next to a product label to additionally display promotional information.

As an attempt to provide variable promotional information, Japanese patent application publication No. 2013-43332 (published on March 1, 2012), titled "Electronic Price Display system," was filed by ISHIDA Co., LTD. The Japanese patent application discloses a first display device to display product information, and a second device detachably installed to the first device to display promotional information of a product. The second device has a structure similar to that of the first display device, incurring an equivalent cost.

### SUMMARY

The following description relates to an auxiliary electronic information label with a simple structure that can be manufactured at low cost. Also, a detachable structure that enables a change in information displayed in segment display is provided.

Further, a structure for displaying promotional information with low power consumption is provided.

In one general aspect, there is provided an auxiliary electronic information label including a flat panel display panel that is driven by segment electrodes formed as a circuit pattern on a flexible printed circuit board. One end of the flexible printed circuit board may be connected to a connector of a main electronic information label.

In another general aspect, the auxiliary electronic information label may include a detachable display unit disposed close to the flat panel display panel and detachably attached to the flexible printed circuit board. In another general aspect, the detachable display unit may be segment-driven, and may display fixed information.

In another general aspect, information displayed by the auxiliary electronic information label may flash. The flashing operation may be continued by an independent driving control circuit even when the main electronic information label is in sleep mode.

Other features and aspects will be apparent from the following detailed description, the drawings, and the claims.

### BRIEF DESCRIPTION OF THE DRAWINGS

FIG. 1 is a diagram illustrating a configuration of an electronic information label management system according to an exemplary embodiment.
FIG. 2 is a block diagram illustrating a schematic configuration of an electronic information label according to an exemplary embodiment.
FIG. 3 is a diagram illustrating a schematic configuration of an auxiliary electronic information label according to an exemplary embodiment.
FIG. 4 is a block diagram illustrating a schematic configuration of a display driving unit 320 according to another exemplary embodiment.
FIG. 5 is a diagram illustrating a schematic configuration of an auxiliary electronic information label 130 according to another exemplary embodiment.
FIG. 6 is a diagram illustrating a configuration of a detachable display unit according to an exemplary embodiment.
FIG. 7 is a diagram illustrating the rear of the detachable display unit of FIG. 6.
FIG. 8 is a diagram illustrating an example of an auxiliary electronic information label to which two detachable display units are attached.
FIG. 9 is a diagram illustrating an exterior of an auxiliary electronic information label according to another exemplary embodiment.
FIG. 10 is a diagram illustrating a schematic configuration of the auxiliary electronic information label of FIG. 9.
FIG. 11 is a diagram illustrating examples of display patterns of the segment electrode portion of FIG. 9 and FIG. 10.
FIG. 12 is a flowchart illustrating a method of an electronic information label to display merchandise information.

Throughout the drawings and the detailed description, unless otherwise described, the same drawing reference numerals will be understood to refer to the same elements, features, and structures. The relative size and depiction of these elements may be exaggerated for clarity, illustration, and convenience.

### DETAILED DESCRIPTION

The following description is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art. Also, descriptions of well-known functions and constructions may be omitted for increased clarity and conciseness.

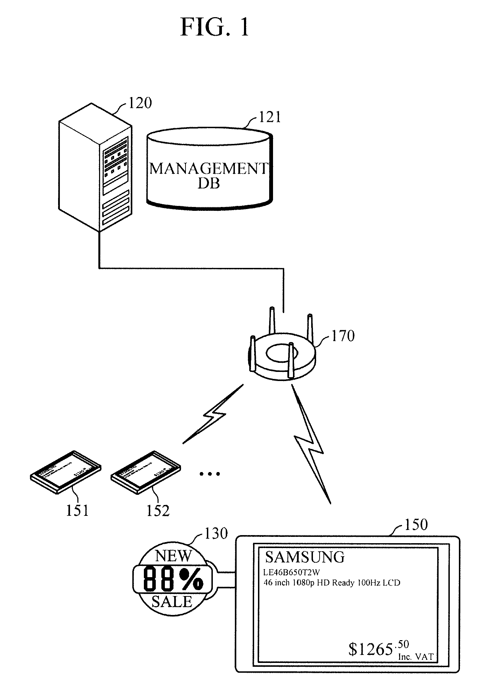

FIG. 1 is a diagram illustrating a configuration of an electronic information label management system according to an exemplary embodiment. Referring to FIG. 1, the electronic information label management system includes a management server 120, a gateway 170, and electronic information labels 150, 151, and 152. The electronic information labels are divided into a plurality of groups. The management server 120 manages each of the plurality of groups of electronic information labels through each of a plurality of gateways. In FIG. 1, one gateway and a number of electronic information labels managed by the gateway are exemplarily illustrated. In the illustrated exemplary embodiment, the electronic information label management server 120 is connected to the gateway 170 by wire. The gateway 170 and the electronic information labels belonging to a group associated with the gateway 170 communicate with each other according to protocols defined in PHY/MAC layer in accordance with near field wireless communication, for example, IEEE 802.15.4 standards.

The electronic information labels are divided into a plurality of groups and merchandise information is updated on a group-by-group basis. To reduce the power consumption of the electronic information labels that are supplied with power from a battery, the electronic information labels remain in sleep mode until they wake up for information update. A display may be an electronic paper display (EPD) that is capable of continuously displaying information even without supplied power. Due to the bistability that enables continued display of information even in the absence of power supply, the EPD is employed by the electronic information label that needs to reduce power consumption. Well-known examples of the EPD may include: a twist-ball type EPD using a half-sphere twist ball changed with electrostatic charges; an electrophoresis display that applies an electrophoresis scheme and a microcapsule; and a cholesterol liquid crystal display using cholesterol liquid crystal.

In one exemplary embodiment, a main electronic information label 150 may be connected with at least one auxiliary electronic information label 130. In FIG. 1, the main electronic information label 150 displays merchandise information including a product name, a product's price, and the like. Referring to FIG. 1, the auxiliary electronic information label displays promotional information, such as a discount rate, wording indicating a product is on sale, and the like.

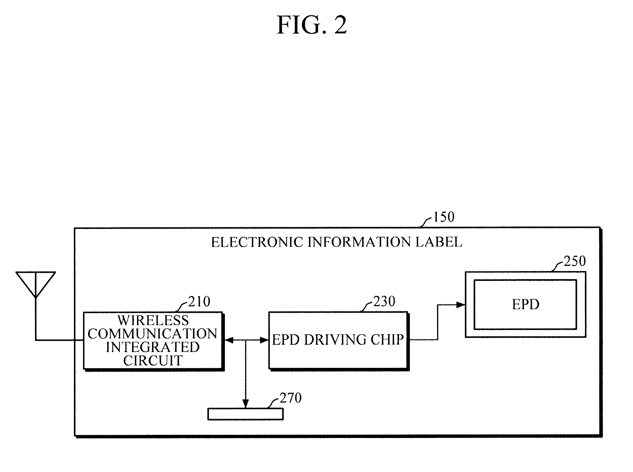

FIG. 2 is a block diagram illustrating a schematic configuration of an electronic information label according to an exemplary embodiment. Referring to FIG. 2, an electronic information label 150 includes a wireless communication integrated circuit (IC) 210, an EPD driving chip 230, and an EPD 250. Although not illustrated, the electronic information label 150 is supplied with power from a battery. In FIG. 2, the wireless communication integrated circuit 210 is a system-on-chip integrated circuit that includes several components integrated thereon, wherein the components may include a ZigBee transceiver, a microprocessor, a memory, an analog-to-digital converter, a digital-to-analog converter, and a peripheral device input/output interface, such as a serial peripheral interface (SPI). However, the aspects of the present disclosure are not limited thereto, such that the wireless communication integrated circuit may be implemented through at least one or combination of various design methods using, for example, dedicated hardware, gate array, an individual semiconductor component, or the like.

The ZigBee transceiver communicates with the gateway 170 via ZigBee scheme. ZigBee, which is one of communication schemes that define PHY/MAC layer based on IEEE 802.15.4 standard, is a near field low-speed communication specification with low power consumption and high security. However, aspects of the present disclosure are not limited thereto, such that any near filed communication scheme, which may employ only a part of Bluetooth or ZigBee specifications, may be used. In one exemplary embodiment, the memory is a flash memory that consumes less power, and retains data even in the absence of battery. Aspects of the present disclosure, however, are not limited thereto, such that any appropriate well-known memory may be employed.

The microprocessor of the wireless communication IC 210 checks whether product information has been updated after waking up in response to, for example, a timer event. When update of the displayed merchandise information is necessary, the microprocessor controls the EPD driving chip 230 via the peripheral device input/output interface. The EPD driving chip 230 drives the EPD 250 to display updated merchandise information. In one exemplary embodiment, the EPD is driven at high voltage and it takes time to recharge a charge pump circuit. The microprocessor downloads an image for display to the EPD driving chip 230, transmits information about parameters related to the display of the image, for example, information as to whether the display is on or off or the interval at which the display should flash, and enter again into sleep mode. Even after the microprocessor has entered into sleep mode, the EPD driving chip 230 drives the charge pump to generate required high voltage, displays the image on the EDP 250, and controls display state according to parameters.

In one general aspect, the main electronic information label 150 drives the auxiliary electronic label 130 through the connector 270. In one exemplary embodiment, the connector 270 is connected to the peripheral device input/output interface, for example, an SPI interface, of the microprocessor within the wireless communication IC 210. However, aspects of the present disclosure are not limited thereto, such that the connector 270 may be connected to the EPD driving chip 230.

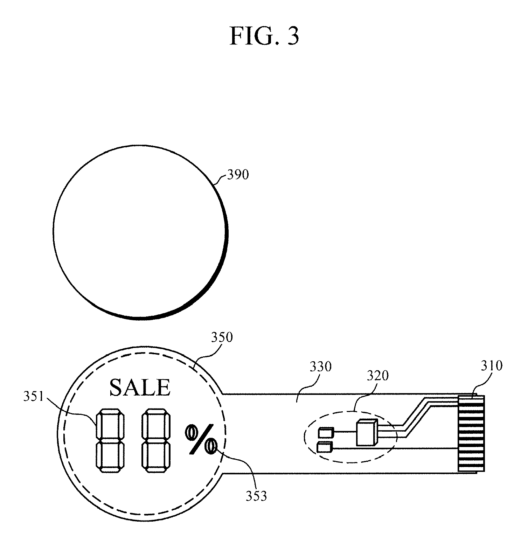

FIG. 3 is a diagram illustrating a schematic configuration of an auxiliary electronic information label according to an exemplary embodiment. Referring to FIG. 3, the auxiliary electronic information label 130 includes a flat panel display panel 390, a flexible printed circuit board 330, and a display driving unit 320.

In one exemplary embodiment, the flat panel display panel 390 is an electronic ink panel formed of microcapsules densely coated over a conductive Indium Tin Oxide (ITO) polyester film. As ink particles in the microcapsules migrate to a surface of the film due to electrophoresis, the panel is colorized. However, aspects of the present disclosure are not limited thereto, such that various types of segment-driven panels, for example, a liquid crystal display may be used.

In general aspect, the flexible printed circuit board 330 may have an external connecting portion 310 at one end to be connected to a connector 270 of the main electronic information label, and a segment electrode portion 350 at one surface, wherein the segment electrode portion 350 includes a plurality of segment electrodes 351 and 353 that form an electrode pattern for displaying additional information. In one general aspect, the flexible printed circuit board 330 is disposed in such a manner that the segment electrode portion 350 thereof is in tight contact with one surface of the flat panel display panel 390. The segment electrode portion 350 applies a driving voltage to the flat panel display panel 390, especially, to the conductive ITO film that serves as a common electrode, thereby causing electrophoresis in the microcapsules. In one exemplary embodiment, the flat panel display panel 390 is disposed in the segment electrode portion 350 area of the flexible printed circuit board 330.

In one exemplary embodiment, the flexible printed circuit board 330 has an external connecting portion 310 at one end to be connected to the connector 270 of the main electronic information label. The flexible printed circuit board 330 has a segment electrode portion 350 formed on the other end. The external connecting portion 310, which is an electrode pattern formed by a printed circuit pattern, is inserted into the connector of the main electrode information label to transmit and receive a plurality of electrical signal to and from the connector. Although not illustrated, the flexible printed circuit board 330 may further include a power supply unit that is connected to some terminals of the external connecting portion to stabilize power received from the main electronic information label and supply the stabilized power to a device. For example, the power supply unit may be a voltage regulator. In this case, the auxiliary electronic information label may be supplied with power from the main electronic information label. However, aspects of the present disclosure are not limited thereto, such that the auxiliary electronic information label may be supplied with the power from its own power supply, for example, a battery equipped therein.

In the illustrated exemplary embodiment, segment electrodes include segments, two indicating numerals and one indicating the percent sign (%). However, aspects of the present disclosure are not limited thereto, such that a plurality of electrode segments arranged in a matrix to indicate fixed wording or letters in low resolution may be used.

Each segment is connected to a driving chip of the display driving unit 320 via the circuit pattern. The connection wiring between each segment and the driving chip may be formed on a rear of the flexible printed circuit board 330. The display driving unit 320 controls the flat panel display panel 390 to display additional information by driving the segment electrode portion 350 according to display information received by the external connecting portion 310. In one exemplary embodiment, the display driving unit 320 may be an amplification circuit that amplifies a driving signal of the main electronic information label and transmits an amplified signal to the segment electrode portion 350. In another exemplary embodiment, the display driving unit 320 may be a decoder that receives data to be displayed and generates an On/Off signal to control each segment electrode. For example, the display driving unit 320 may be a segment decoder that receives a two-digit numeral and controls On/Off of each segment to form the two-digit numeral on the segment electrode portion 350 as shown in FIG. 3.

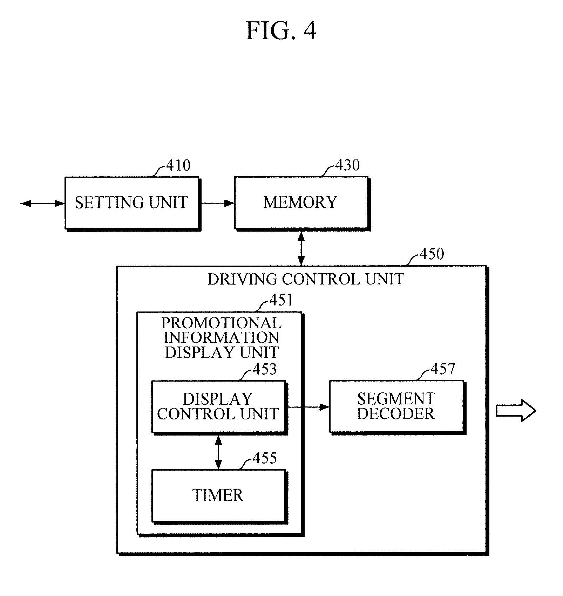

FIG. 4 is a block diagram illustrating a schematic configuration of a display driving unit 320 according to another exemplary embodiment. Referring to FIG. 4, the display driving unit 320 includes a memory 430, a setting unit 410 to receive display control information from the main electrode information label and store the information in the memory 430, and a driving control unit 450 to drive the segment electrode portion 350 according to the display control information stored in the memory 430. The display control information may be specific display information or the combination of information to control the display. For example, the display control information may include information about a numeral or letter to be segment-displayed. In another example, the display control information may include control information for On/Off segment display of a specific letter. In the example, the driving control unit 450 may include a segment decoder 457. The segment decoder 457 generates a driving signal for displaying a particular numeral by turning each segment of the segment electrode portion 350 on or off in accordance with the numeral received from the main electronic information label and stored in the memory 430.

In one exemplary embodiment, the driving control unit 450 may further include a promotional information display unit 451 that flashes at least a part of the segment electrode portion 350 according to the display control information. In one exemplary embodiment, the promotional information display unit 451 may include a timer 455 and a display control unit 453 that programs the timer in accordance with the control information stored in the memory 430 and controls a display state in response to a timer event. The timer 455 is a multi-channel timer circuit capable of generating a plurality of periodic events. The display control unit 453 programs a register of the timer 455 in order to set a flash interval. A value recorded in the register may be manually set in a management server by a user. This value is received from the main electronic information label and stored in the memory 430. In another example, a value recorded in the register may be a predetermined fixed value. For example, a time to flash on and a time to flash off are separately controlled, or the flash interval may be controlled using a plurality of values by, for example, alternately using two different intervals.

The setting unit 410, the display control unit 453, the segment decoder 457, and a single microprocessor may be implemented as a program. The memory 430, the timer 455, and the microprocessor may be integrated into a single semiconductor chip.

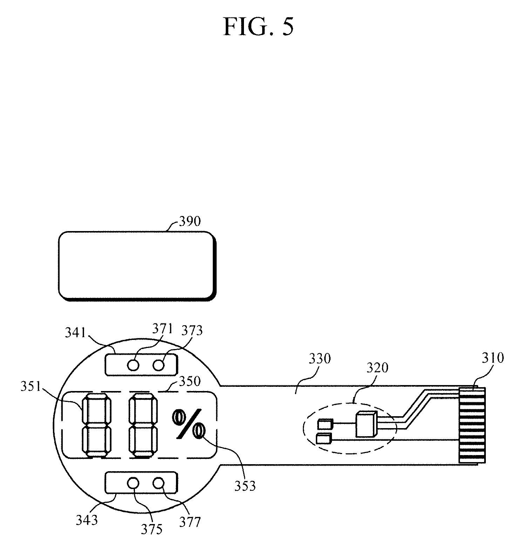

FIG. 5 is a diagram illustrating a schematic configuration of an auxiliary electronic information label 130 according to another exemplary embodiment. Referring to FIG. 5, the auxiliary electronic information label 130 includes a flat panel display panel 390, a flexible printed circuit board 330, and a display driving unit 320. Descriptions of the elements that are the same as those in FIG. 3 will not be reiterated. Unlike the exemplary embodiment of FIG. 3, in the exemplary embodiment of FIG. 5, the flexible printed circuit board 330 further includes elements 341, 343, 371, 373, 375, and 377 that allow detachable display units to be detachably installed on each of a top and a bottom of a segment electrode portion 350 in which the flat panel display panel 390 is disposed. As will be described later, the detachable display unit is disposed close to the flat panel display panel, and information to be displayed may be integrally formed as a whole. The illustrated exemplary embodiment relates to a structure in which two detachable display units are provided, and aspects of the present disclosure are not limited thereto, such that there may be provided a single detachable display unit or three or more detachable display units.

In one general aspect, the flexible printed circuit board 330 may include fixation units 341 and 343 to secure the detachable display units, and connection electrodes 371, 373, 375, and 377 to deliver a driving signal to each of the detachable display unit. In one exemplary embodiment, the fixation units 341 and 343 may be magnets. In another exemplary embodiment, the fixation units 341 and 343 may be Velcro. The detachable display units are fixed at locations close to the flat panel display panel 390 by coupling the flat panel display panel 390 with a corresponding element of each detachable display unit. The connection electrodes 371, 373, 375, and 377 are electrodes that drive segments of the detachable display units. In the illustrated exemplary embodiment, a pair of connection electrodes are provided for one detachable display unit. In this case, the detachable display units form a single segment, and thus all contents flash simultaneously. However, aspects of the present disclosure are not limited thereto, such that more connection electrodes may be provided depending on the number of segments of the detachable display unit. The connection electrodes are connected to a wiring pattern (not shown) of the flexible printed circuit board of the driving circuit in the display driving unit 320.

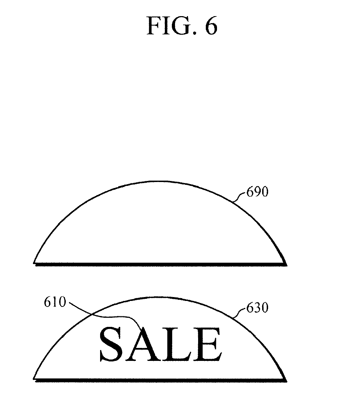

FIG. 6 is a diagram illustrating a configuration of a detachable display unit according to an exemplary embodiment. The detachable display unit is located close to the flat panel display panel 390 of FIG. 5 and detachably attached to an upper part of the flexible printed circuit board 330 to display information. In one exemplary embodiment, the detachable display unit includes an auxiliary circuit board 630 and a flat panel display panel 690 that is attached to a front surface of the auxiliary circuit board 630. In one exemplary embodiment, the flat panel display panel 690 may be an electrode paper display (EPD). Aspects of the present disclosure are not, however, limited thereto, such that the flat panel display panel 690 may be any flat panel display, such as a liquid crystal display, an organic light-emitting display, and the like. In one exemplary embodiment, the auxiliary circuit board 630 is a flexible printed circuit board, but aspects of the present disclosure are not limited thereto, such that the auxiliary circuit board may be any general printed circuit board.

In one exemplary embodiment, the auxiliary circuit board 630 has auxiliary segment electrodes 610 patterned thereon. In the illustrated exemplary embodiment, the auxiliary segment electrodes 610 are electrically connected to each other to form a single electrical electrode. However, aspects of the present disclosure are not limited thereto, such that a plurality of divided segments may be provided and they may be separately driven. The flat panel display panel 690 is attached to a front surface of the auxiliary circuit board and driven by the auxiliary segment electrodes 610.

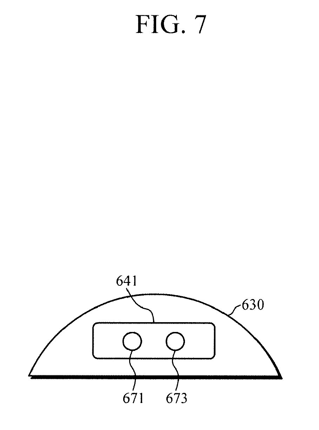

FIG. 7 is a diagram illustrating the rear of the detachable display unit of FIG. 6. As shown in FIG. 7, an adhering portion 641 to be detachably attached to the flexible printed circuit board and connection electrodes 671 and 673 to be electrically connected to at least one of segment electrodes are formed on the rear surface of the auxiliary circuit board 630 of the detachable display unit. In one example, the adhering portion 641 may be a magnet. In another example, the adhering portion 641 may be Velcro. The detachable display unit is fixed at a location close to the flat panel display panel 390 by coupling it with the corresponding fixation unit 341 of the flexible printed circuit board. The connection electrodes 671 and 673 are electrodes that drive the auxiliary segment electrodes 610. In the illustrated exemplary embodiment, a pair of connection electrodes are provided for one detachable display unit. In this case, all auxiliary segment electrodes are connected to the pair of connection electrodes and driven simultaneously. Thus, the detachable display units form a single segment and thus all contents flash simultaneously. However, aspects of the present disclosure are not limited thereto, such that more connection electrodes may be provided depending on the number of segments of the detachable display unit. The connection electrodes 671 and 673 on the rear surface of the auxiliary circuit board electrically communicate with the auxiliary segment electrodes 610 via a printed wiring pattern. Although not illustrated, the auxiliary circuit board 630 may further include a simple driving circuit on the rear surface thereof to drive the auxiliary segment electrodes 610.

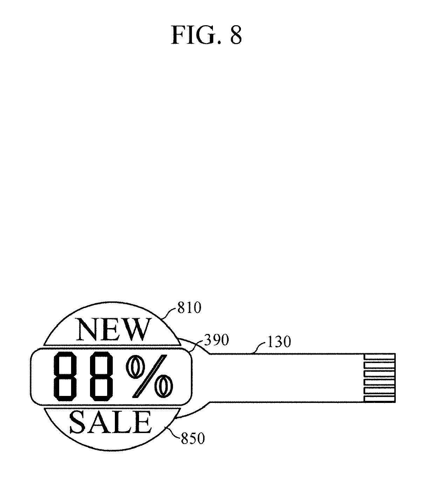

FIG. 8 is a diagram illustrating an example of an auxiliary electronic information label to which two detachable display units are attached. Referring to FIG. 8, the detachable display unit 810 is closely attached above a main flat panel display panel 390 and the detachable display unit 850 is closely attached below the main flat panel display panel 390. Aspects of the present disclosure are not, however, limited thereto, such that the main flat panel display panel 390 may have the detachable display units attached on each side or only one detachable display unit or two may be attached without the main display panel.

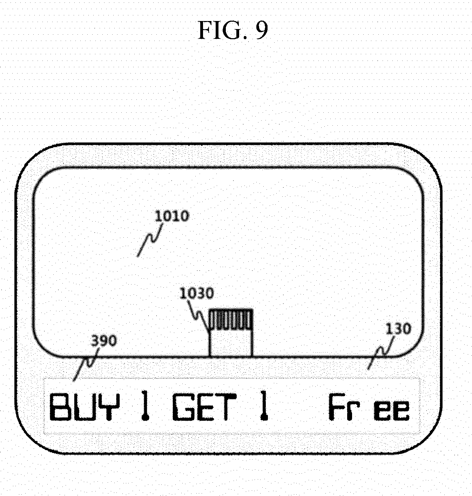

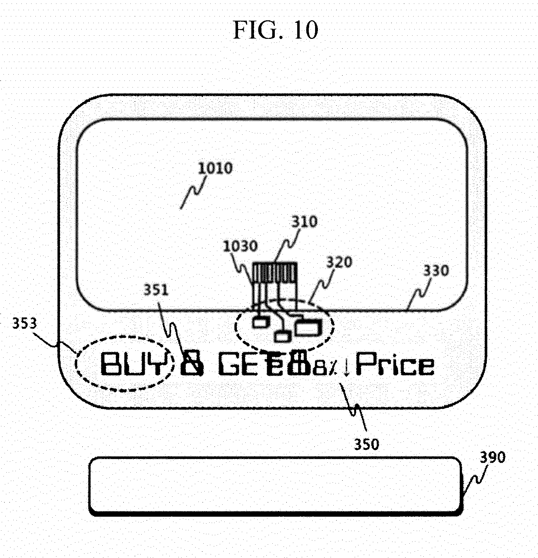

FIG. 9 is a diagram illustrating an exterior of an auxiliary electronic information label according to another exemplary embodiment. FIG. 10 is a diagram illustrating a schematic configuration of the auxiliary electronic information label of FIG. 9. Referring to FIGS. 9 and 10, the auxiliary electronic information label includes a flexible printed circuit board 330 which forms a main frame. The flexible printed circuit board 330 includes a hollow portion 1010 to be fitted to the rim of the main electronic information label and has a segment electrode portion 350 at a lower part thereof to have the flat panel display panel 390 attached thereto, and an external connecting portion 310 has a protrusion 1030 projecting from the inside thereof toward the hollow portion 1010.

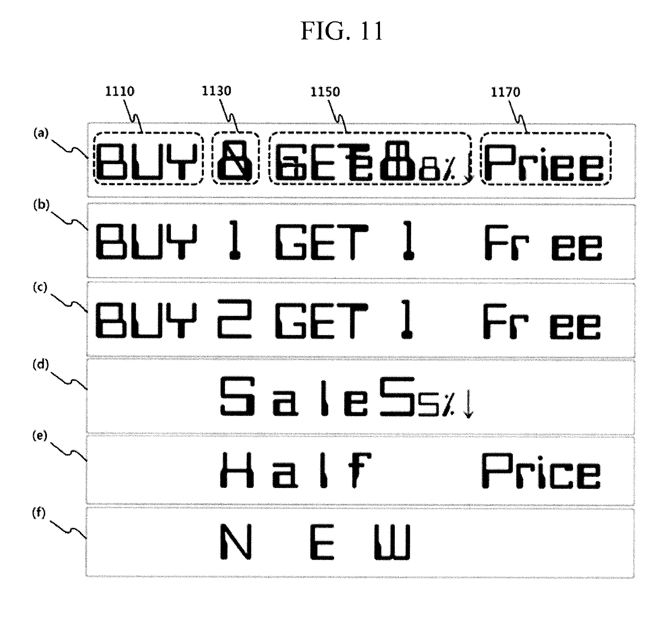

FIG. 11 is a diagram illustrating examples of display patterns of the segment electrode portion of FIG. 9 and FIG. 10. In one general aspect, the segment electrode portion 350 may be formed by a mixture of an on/off driven fixed display pattern 1110 and a segment-combined display pattern 1130. FIG. 11(a) illustrates the entire pattern of the segment electrode portion. In FIG. 11(a), electrode pattern 1110 is a fixed display pattern formed by electrodes electrically connected to each other to display on or off a wording "BUY." In FIG. 11(a), the electrode pattern 1130 is a segment-combined display pattern in which separate segments are each independently operated to represent numerals 0 to 9 and English letters, "S," "H," and "N," and display information is chosen by the combination of segments. The electrode pattern 1150 includes a plurality of patterns available for segment combination to represent one or several English letters. The electrode pattern 1170 includes a mixture of a fixed display pattern and a plurality of patterns available for segment combination to represent one or several English letters. By designing the segment electrode portion 350 by appropriately mixing a fixed display pattern and segment-combined display patterns which only allow for a combination of limited segments, it is possible to control a change of display content of the entire display pattern using a limited number of driving ports. Accordingly, display control is possible using an input/output port equipped in the microprocessor of the wireless communication integrated chip 210, without need of an additional decoder.

FIG. 11(b) illustrates an example of a result of driving the segment electrode portion to display a wording "BUY 1 GET 1 Free." FIG. 11(c) illustrates an example of a result of driving the segment electrode portion to display a wording "BUY 2 GET 1 Free." FIG. 11(d) illustrates an example of a result of driving the segment electrode portion to display a wording "Half Price." FIG. 11(e) illustrates an example of a result of driving the segment electrode portion to display a wording "NEW."

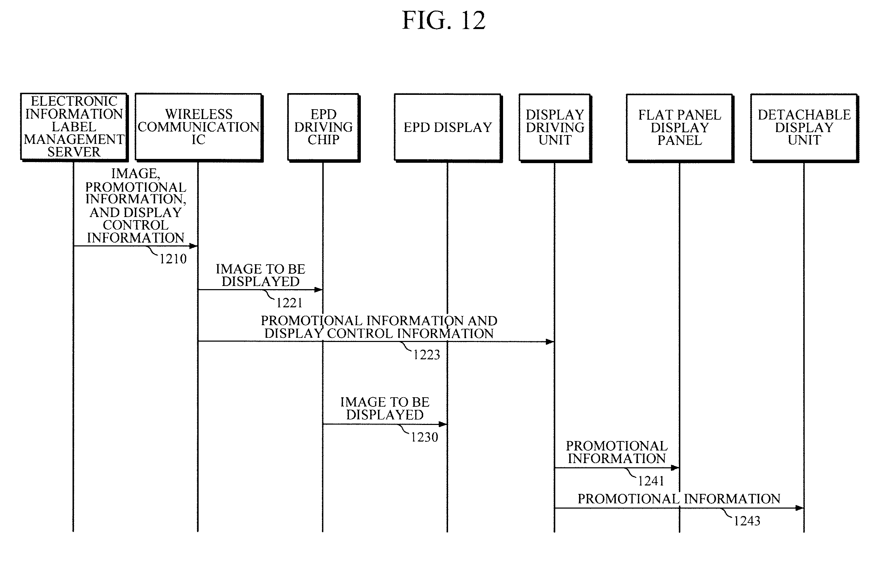

FIG. 12 is a flowchart illustrating a method of an electronic information label to display merchandise information. As shown in FIG. 12, an electronic information label management server transmits merchandise information and display control information to a wireless communication integrated circuit via a gateway in 1210, wherein the merchandise information and display control information are input from an operator and managed in a database. In the illustrated exemplary embodiment, the merchandise information is transmitted in a display image file that contains information about a product name, product price, and the like. The promotional information is transmitted in display data form that is related to ON/OFF display segment. The display control information is data regarding, for example, a flash interval.

A microprocessor of the wireless communication integrated circuit activates an EPD driving chip, and transmits the display image from among the received information to the EPD driving chip in 1221. Then, the microprocessor activates a display driving unit of the auxiliary electronic information label, and transmits the promotional information and the display control information to the display driving unit in 1223.

The EPD driving chip obtains required driving voltage by operating a charge pump to drive an EPD. Then, the EPD driving chip outputs the display data to the EPD and the EPD displays the merchandise information in 1230. The display driving unit of the auxiliary electronic information label prepares voltage required for driving a flat panel display panel, which is an EPD, and outputs a segment ON/OFF signal to the flat panel display panel to display the promotional information in 1241. Thereafter, the display driving unit outputs the segment ON/OFF signal to a detachable display unit in 1243. Although not illustrated, the display driving unit periodically wakes up to switch the display state of the flat panel display panel or the detachable display unit, thereby causing the display panel or unit to flash.

According to the above described exemplary embodiment, it is possible to manufacture the auxiliary electronic information label at low cost. In addition, it is possible to change display information by changing the detachable display unit. Further, the electronic information label is controlled to flash by an independent driving control circuit even in sleep mode, thereby providing sale promotion at low power.

A number of examples have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. An auxiliary electronic information label comprising:
a flat panel display panel;
a flexible printed circuit board comprising an external connecting portion and a segment electrode portion and being disposed in such a manner that the segment electrode portion is in tight contact with one surface of the flat panel display panel, wherein the external connecting portion is connected to a connector of a main electronic information label and the segment electrode portion is formed one end of the flexible printed circuit board and comprises a plurality of segment electrodes that form an electrode pattern for displaying additional information; and
a display driving unit configured to control additional information to be displayed on the flat panel display panel by driving the segment electrode portion according to control information received by the external connecting portion.

2. The auxiliary electronic information label of claim 1, further comprising:
a detachable display unit which is disposed close to the flat panel display panel and detachably attached to the flexible printed circuit board, and displays information.

3. The auxiliary electronic information label of claim 2, wherein the detachable display unit comprises an auxiliary circuit board and an auxiliary flat panel display panel,
wherein the auxiliary circuit board has a rear surface on which an adhering portion to be detachably attached to the flexible printed circuit board and a connection electrode to be electrically connected to at least one of the segment electrodes are formed and a front surface on which an auxiliary segment electrode electrically communicating with the connection electrode is formed, and
the auxiliary flat panel display panel is attached to a front surface of the auxiliary circuit board and driven by the auxiliary segment electrode.

4. The auxiliary electronic information label of claim 3, wherein the auxiliary segment electrode is all connected to a pair of connection electrodes and simultaneously driven.

5. The auxiliary electronic information label of claim 3, wherein the auxiliary circuit board is a flexible printed circuit board.

6. The auxiliary electronic information label of claim 1, wherein the display driving unit comprises:
a memory;
a setting unit configured to receive display control information from the main electronic information label and store the received label in a memory; and
a driving control unit configured to drive the segment electrode portion according to the display control information stored in the memory.

7. The auxiliary electronic information label of claim 6, wherein the driving control unit further comprises a promotional information display to flash at least a part of the segment electrode portion according to the display control information.

8. The auxiliary electronic information label of claim 7, wherein the promotional information display unit comprises a timer configured to periodically generate an event, a flash interval setting unit configured to set a timer interval according to settings information, and a flash driving unit configured to flash at least a part of the segment electrode portion in response to a timer event.

9. The auxiliary electronic information label of claim 1, wherein the segment electrode portion is formed on the other end of the flexible printed circuit board.

10. The auxiliary electronic information label of claim 1, wherein the flexible printed circuit board comprises a hollow portion to be fitted to a rim of the main electronic information label and has the segment electrode portion at an upper or lower part thereof to have the flat panel display panel attached thereto, and the external connecting portion has a protrusion projecting from an inside thereof toward the hollow portion.

11. The auxiliary electronic information label of claim 1, wherein the segment electrode portion is formed by a mixture of an on/off driven fixed display pattern and a segment-combined display pattern.

12. The auxiliary electronic information label of claim 1, further comprising:
a power supply connected to some terminals of the external connecting portion to stabilize power received from the main electronic information label and supply the stabilized power to a device.
